# EUROPÄISCHE PATENTSCHRIFT

(11) **EP 3 179 102 B1**
(45) Veröffentlichungstag und Bekanntmachung des Hinweises auf die Patenterteilung: **18.12.2019**
(21) Anmeldenummer: 16002755.3
(22) Anmeldetag: 04.05.2015
(51) Int. Cl.: F04B 9/133, F04B 43/073, B05B 9/04

(54) **ABLUFTFÜHRUNG FÜR EINE BESCHICHTUNGSMITTELPUMPE**
EXHAUST AIR GUIDE FOR A COATING AGENT PUMP
ÉVACUATION D'AIR POUR UNE POMPE À AGENT DE REVÊTEMENT

(30) Priorität: 08.05.2014 DE 102014006759
(43) Veröffentlichungstag der Anmeldung: 14.06.2017
(62) Teilanmeldung aus: 15720602.0
(73) Patentinhaber: Dürr Systems AG, 74321 Bietigheim-Bissingen (DE)
(72) Erfinder: PREUSS, Kevin, 51674 Wiehl (DE); GERLACH, Roland, 74321 Bietigheim-Bissingen (DE); SCHÄFER, Ralf, 71672 Marbach (DE)
(74) Vertreter: v. Bezold & Partner Patentanwälte - PartG mbB

(56) Entgegenhaltungen:
- DE-A1- 4 425 515
- US-A- 5 094 596
- US-A1- 2005 249 612
- US-A1- 2013 101 445

## Beschreibung

Die Erfindung betrifft eine Abluftführung zur Abführung von Abluft von einer pneumatisch angetriebenen Pumpe, insbesondere von einer Beschichtungsmittelpumpe in einer Lackieranlage.

In modernen Lackieranlagen zur Lackierung von Kraftfahrzeug-Karosseriebauteilen werden zur Förderung des zu applizierenden Lacks oftmals pneumatisch angetriebene Pumpen eingesetzt, die zum Antrieb einen Pneumatikzylinder und einen Kolben aufweisen, der in dem Pneumatikzylinder verschiebbar angeordnet ist, wobei der Kolben beidseitig mit Luftdruck beaufschlagt werden kann, um den Kolben in der gewünschten Richtung zu verschieben. Der Kolben in dem Pneumatikzylinder kann über eine gemeinsame Kolbenstange beispielsweise zwei Fördermembranen verformen, wie es in der deutschen Patentanmeldung DE 10 2013 003 620.8 beschrieben ist. Die Abluft aus dem Pneumatikzylinder wird hierbei über eine Umschalteinheit gesteuert und dann durch einen Schalldämpfer in die Umgebung abgegeben, wobei der Schalldämpfer direkt an die Umschalteinheit angeflanscht ist.

Nachteilig an diesen bekannten Pumpen ist die Tatsache, dass die Abluft aus dem Pneumatikzylinder zunächst unter Druck steht und dann expandiert, was zu einer starken Abkühlung der Abluft führt. Die Abkühlung der Abluft kann zu einer unerwünschten Kondenswasserbildung führen, so dass sich Kondenswasser in der Abluftführung und insbesondere auf der Umschalteinheit und auf dem Schalldämpfer ansammeln kann. Im Extremfall kann die expansionsbedingte Abkühlung sogar so groß sein, dass das Kondenswasser gefriert und dadurch im schlimmsten Fall die Funktionsfähigkeit der Umschalteinheit beeinträchtigt.

Derartige Pumpen sind beispielsweise auch aus DE 44 25 515 A1 und US 5 094 596 bekannt.

Aus US 2005/249612 A1 ist eine Abluftführung gemäß dem Oberbegriff von Anspruch 1 bekannt. Auch hierbei können jedoch expansionsbedingte Abkühlungen der Abluft zu Problemen führen.

Der Erfindung liegt deshalb die Aufgabe zugrunde, die vorstehend beschriebene pneumatisch angetriebene Pumpe so zu verbessern, dass die Funktionsfähigkeit durch expansionsbedingte Abkühlungen der Abluft nicht beeinträchtigt wird.

Diese Aufgabe wird durch eine erfindungsgemäße Abluftführung gemäß dem Hauptanspruch gelöst.

Die erfindungsgemäße Abluftführung weist zunächst in Übereinstimmung mit dem Stand der Technik einen Einlass auf, um die Abluft von der pneumatisch angetriebenen Pumpe aufzunehmen. Weiterhin umfasst die erfindungsgemäße Abluftführung in Übereinstimmung mit dem Stand der Technik einen Auslass, um die Abluft an die Umgebung abzugeben. Zwischen dem Einlass der Abluftführung und dem Auslass der Abluftführung verläuft hierbei in Übereinstimmung mit dem Stand der Technik ein Abluftkanal, in dem die Abluft von dem Einlass zu dem Auslass strömt. Der Abluftkanal ist hierbei in einem Gehäusekörper angeordnet, wobei vermieden werden sollte, dass der Gehäusekörper so weit abkühlt, dass die Funktionsfähigkeit der Funktionskomponenten in dem Gehäusekörper beeinträchtigt wird.

Die Erfindung beruht auf der technisch-physikalischen Erkenntnis, dass der Wärmeübergang von der Wandung des Abluftkanals auf den kalten Abluftstrom in dem Abluftkanal besonders groß ist, wenn der Abluftstrom stumpfwinklig oder gar rechtwinklig auf die Wandung des Abluftkanals auftrifft. Dies bedeutet im Rahmen der Erfindung vorzugsweise, dass der Anströmwinkel zwischen dem Abluftstrom und der Wandung des Abluftkanals im Bereich von 30°-90°, 45°-90°, 65°-90°, 80°-90° oder sogar 85°-90° liegt.

Die Erfindung sieht deshalb vorzugsweise vor, dass die Abluftströmung in dem Abluftkanal nahezu vollständig parallel zu der Wandung des Abluftkanals verläuft, um zu verhindern, dass die Abluftströmung stumpfwinklig oder gar rechtwinklig auf die Wandung des Abluftkanals auftrifft, da dies zu einem starken Wärmeübergang von der Wandung auf die kalte Abluftströmung führen würde, was wiederum mit einer starken Abkühlung der Wandung verbunden wäre, was unerwünscht ist.

Allerdings lässt sich eine Richtungsänderung der Abluftströmung in der Abluftführung verständlicherweise nicht vollständig vermeiden. Die Erfindung sieht deshalb vorzugsweise vor, dass im Bereich einer solchen Richtungsänderung des Abluftkanals ein Wärmeisolationselement in dem Abluftkanal angeordnet ist, wobei die Abluftströmung dann stumpfwinklig auf das Wärmeisolationselement auftrifft und nicht auf die Wandung des Abluftkanals. Auch hierbei bedeutet der Begriff "stumpfwinklig" vorzugsweise, dass die Abluftströmung mit einem Anströmwinkel im Bereich von 30°-90°, 45°-90°, 65°-90°, 80°-90° oder sogar 85°-90° auf die Wandung des Wärmeisolationselements auftrifft. Zwar staut sich die kalte Abluft dann ebenfalls an dem Wärmeisolationselement, was grundsätzlich den Wärmeübergang von dem Wärmeisolationselement auf die kalte Abluft begünstigt. Allerdings besteht das Wärmeisolationselement aus einem wärmeisolierenden Material (z.B. Kunststoff), wohingegen die Wandung des Abluftkanals ansonsten in der Regel aus Metall besteht, was eine wesentlich bessere Wärmeleitfähigkeit aufweist als Kunststoff. Das Wärmeisolationselement verringert also bei einer stumpfwinkligen Anströmung durch die kalte Abluft eine intensive Abkühlung der Wandung des Abluftkanals und damit auch der sonstigen Bauteile (z.B. Umschalteinheit), die vor einer Abkühlung zu schützen sind.

In einer Variante der Erfindung kleidet das Wärmeisolationselement den Abluftkanal innen aus. Das Wärmeisolationselement ist hierbei also ein separates Bauteil, das in dem Abluftkanal eingesetzt ist. In einer anderen Variante der Erfindung ist das Wärmeisolationselement dagegen ein Leitungsbestandteil des Abluftkanals. Beispielsweise kann ein Krümmer des Abluftkanals aus Kunststoff ausgebildet sein, wohingegen die ungekrümmten Leitungsteile des Abluftkanals aus Metall bestehen.

Die vorstehend beschriebenen erfindungsgemäßen Maßnahmen verringern den Wärmeübergang von der Wandung des Abluftkanals und von den vor einer Abkühlung zu schützenden Komponenten (z.B. Umschalteinheit) auf die kalte Abluftströmung und verhindern dadurch eine zu starke Abkühlung der zu schützenden Komponenten.

Eine andere erfindungsgemäße Maßnahme sieht dagegen vor, dass sich die Abluft der Pumpe überhaupt stark abkühlt. Hierzu sieht die Erfindung vor, dass der Abluftkanal einen Querschnitt aufweist, der sich in Strömungsrichtung nicht aufweitet, um eine Expansion der Abluft und die damit verbundene expansionsbedingte Abkühlung der Abluft in dem Abluftkanal zu vermeiden. Beispielsweise kann der Querschnitt des Abluftkanals innerhalb der erfindungsgemäßen Abluftführung eine im Wesentlichen konstante Größe aufweisen. Die eigentliche Expansion der Abluft erfolgt dann erst stromabwärts hinter dem Auslass der Abluftführung, beispielsweise in einem daran angeschlossenen Schalldämpfer. Der Ort der expansionsbedingten Abkühlung wird hierbei also in Strömungsrichtung verlegt aus der Abluftführung in der Umschalteinheit in den angeschlossenen Schalldämpfer, wodurch die vor einer Abkühlung zu schützenden Komponenten (z.B. Umschalteinheit) weniger stark abgekühlt werden.

In einem bevorzugten Ausführungsbeispiel der Erfindung verläuft die Abluftführung durch die Umschalteinheit der Pumpe. Die Umschalteinheit hat hierbei die Aufgabe, die Abluft aus der pneumatisch angetriebenen Pumpe und/oder die Zuluft zu der pneumatisch angetriebenen Pumpe zu steuern. Der Abluftkanal der erfindungsgemäßen Abluftführung verläuft hierbei also durch die Umschalteinheit hindurch und vorzugsweise zu dem Schalldämpfer.

Die Steuerung der Abluft der pneumatisch angetriebenen Pumpe in der Umschalteinheit kann beispielsweise durch ein Membranventil erfolgen, das zur Steuerung eine elastische Membran aufweist. Die elastische Membran ist ein Wärmeisolationselement. Im geöffneten Zustand des Membranventils trifft die kalte Abluft also stumpfwinklig auf die eine Seite der elastischen Membran, was grundsätzlich den Wärmeübergang von der elastischen Membran auf die kalte Abluft begünstigt. Die elastische Membran besteht jedoch aus einem wärmeisolierenden Material (z.B. Kunststoff), wodurch eine übermäßige Abkühlung der Membran verhindert wird.

Es wurde bereits vorstehend erwähnt, dass der Ort der expansionsbedingten Abkühlung vorzugsweise in Strömungsrichtung verlegt wird vom Inneren der Umschalteinheit in den Schalldämpfer hinein. Die Erfindung akzeptiert also vorzugsweise eine expansionsbedingte Abkühlung der Abluft in dem Schalldämpfer und damit auch eine entsprechende Abkühlung des Schalldämpfers selbst. Allerdings verhindert die Erfindung vorzugsweise, dass diese Abkühlung des Schalldämpfers auch zu einer entsprechenden Abkühlung der Umschalteinheit führt. Hierzu sieht die Erfindung vorzugsweise vor, dass der Schalldämpfer thermisch von der Umschalteinheit entkoppelt wird, um den Wärmeübergang von der Umschalteinheit auf den Schalldämpfer zu verringern. Diese thermische Entkopplung wird dadurch erreicht, dass der Schalldämpfer nicht direkt an die Umschalteinheit angeschlossen wird, sondern mittels eines Wärmeisolationselements, das aus einem wärmeisolierenden Material (z.B. Kunststoff) besteht. Der Abluftkanal verläuft hierbei also durch die Umschalteinheit und das Wärmeisolationselement hindurch in den Schalldämpfer. Die geringe Wärmeleitfähigkeit des zweiten Wärmeisolationselements hat den Vorteil, dass sich die Umschalteinheit auch bei einer starken expansionsbedingten Abkühlung des Schalldämpfers nur geringfügig abkühlt.

Es wurde bereits vorstehend kurz erwähnt, dass die Wärmeisolationselemente aus Kunststoff bestehen können, während die Umschalteinheit, der Gehäusekörper der Abluftführung und/oder die Wandung des Abluftkanals aus Metall bestehen können. Die Erfindung ist jedoch hinsichtlich der Materialauswahl nicht auf diese Materialien beschränkt. Entscheidend ist vielmehr, dass die Materialien der Wärmeisolationselemente eine wesentlich geringere Wärmeleitfähigkeit aufweisen als die Materialien der Umschalteinheit, des Gehäusekörpers und/oder der Wandung des Abluftkanals.

Ferner ist zu erwähnen, dass die Erfindung nicht nur Schutz beansprucht für die vorstehend beschriebene erfindungsgemäße Abluftführung. Vielmehr beansprucht die Erfindung auch Schutz für eine entsprechende Beschichtungsmittelpumpe mit einer erfindungsgemäßen Abluftführung.

Die erfindungsgemäße Beschichtungsmittelpumpe weist vorzugsweise zwei gegenüberliegend angeordnete Förderzylinder mit jeweils einem verschiebbaren Kolben auf, wobei die beiden Kolben in den Förderzylindern mit einer gemeinsamen Kolbenstange verbunden sind und deshalb in entgegengesetzten Richtungen angetrieben werden. Der Antrieb der Kolbenstange und damit auch der Antrieb der beiden Kolben in den Förderzylindern erfolgt über einen Pneumatikzylinder, in dem ein weiterer Kolben angeordnet ist, der auf die gemeinsame Kolbenstange wirkt. Der Kolben in dem Pneumatikzylinder kann hierbei beidseitig mit Druckluft beaufschlagt werden, um den Kolben in dem Pneumatikzylinder und damit auch die beiden Kolben in den Förderzylindern in der gewünschten Richtung zu bewegen.

In den beiden Kolben in den Förderzylindern befindet sich vorzugsweise jeweils ein Rückschlagventil, das während eines Ausstoßhubes des jeweiligen Kolbens schließt und während eines Auffüllhubes geöffnet ist.

Schließlich ist noch zu erwähnen, dass die Erfindung nicht beschränkt ist auf Abluftführungen von Lackpumpen, d.h. Pumpen, die Lack fördern. Vielmehr kann eine erfindungsgemäße Abluftführung auch bei anderen Pumpen realisiert werden, die pneumatisch angetrieben sind und andere Fluide fördern, wie beispielsweise Klebstoffe oder Dichtstoffe (z.B. zur Nahtabdichtung),
Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

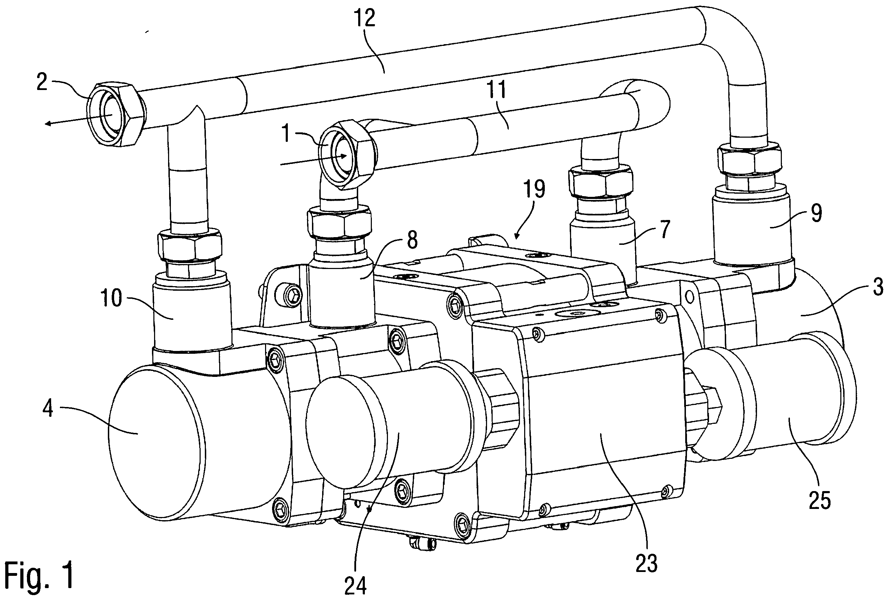

- Figur 1: eine Perspektivansicht einer erfindungsgemäßen Beschichtungsmittelpumpe zur Lackförderung in einer Lackieranlage,
- Figur 2: eine Querschnittsansicht der Beschichtungsmittelpumpe aus Figur 1,
- Figur 3: eine andere Querschnittsansicht durch die Beschichtungsmittelpumpe gemäß den Figuren 1 und 2,
- Figur 4: eine Querschnittsansicht durch die Umschalteinheit der Beschichtungsmittelpumpe aus den Figuren 1-3, sowie

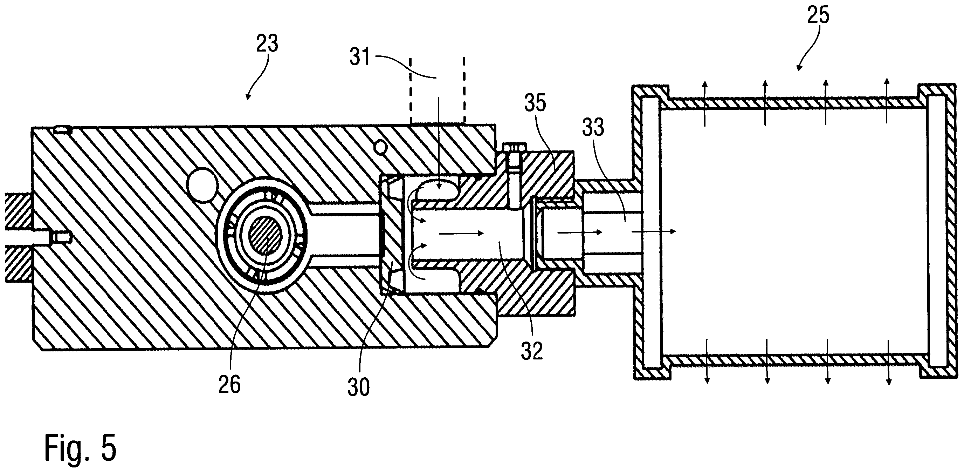

- Figur 5: eine andere Querschnittsansicht der Umschalteinheit.

Die Zeichnungen zeigen eine erfindungsgemäße Beschichtungsmittelpumpe zur Förderung von Lack in einer Lackieranlage zur Lackierung von Kraftfahrzeug-Karosseriebauteilen.

Der zu fördernde Lack wird hierbei über einen Pumpeneinlass 1 aufgenommen und über einen Pumpenauslass 2 mit dem gewünschten Förderdruck abgegeben. Die eigentliche Förderung erfolgt hierbei durch zwei Förderzylinder 3, 4, in denen jeweils ein Förderkolben 5, 6 verschiebbar angeordnet ist.

Die beiden Förderzylinder 3, 4 weisen jeweils einen Beschichtungsmitteleinlass 7, 8 und jeweils einen Beschichtungsmittelauslass 9, 10 auf. Der Pumpeneinlass 1 ist über ein Rohr 11 mit den beiden Beschichtungsmitteleinlässen 7, 8 der Förderzylinder 3, 4 verbunden. Der Pumpenauslass 2 ist in gleicher Weise über ein Rohr 12 mit den beiden Beschichtungsmittelauslässen 9, 10 der Förderzylinder 3, 4 verbunden.

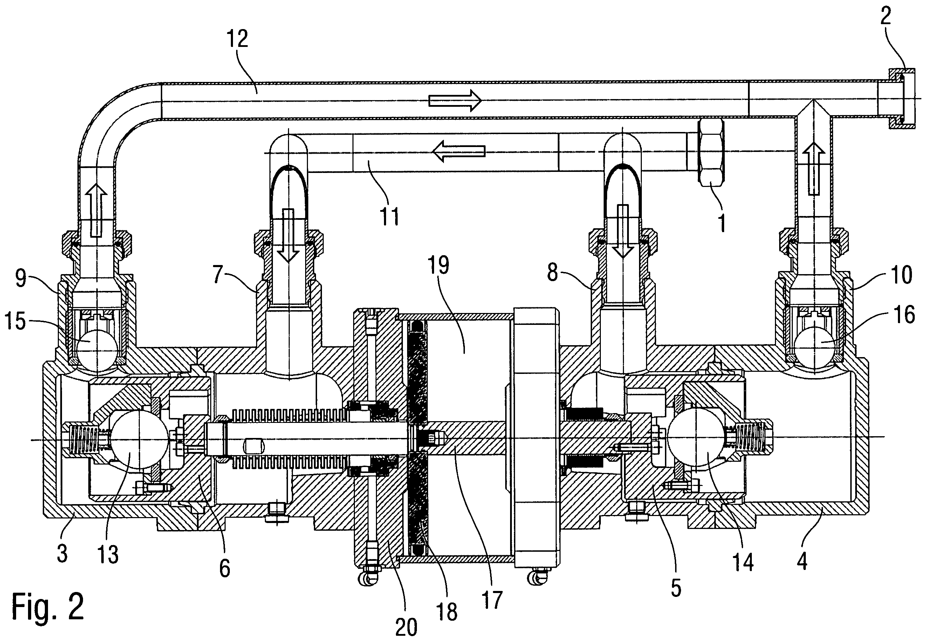

In den beiden Förderkolben 5, 6 befindet sich jeweils ein Rückschlagventil 13, 14, das nur in einer Richtung öffnet. So schließt das Rückschlagventil 13 in dem Förderkolben 6, wenn sich der Förderkolben 6 während eines Ausstoßhubs in Figur 2 von rechts nach links bewegt. Bei einer Bewegung des Förderkolbens 6 in der entgegengesetzten Richtung von links nach rechts öffnet das Rückschlagventil 13 dagegen, damit über den Beschichtungsmitteleinlass 7 neues Beschichtungsmittel durch das Rückschlagventil 13 hindurch auf die linke Seite des Förderkolbens 5 strömen kann.

Hierbei ist zu erwähnen, dass sich in den beiden Beschichtungsmittelauslässen 9, 10 ebenfalls jeweils ein Rückschlagventil 15, 16 befindet. Die beiden Rückschlagventile 15, 16 öffnen jeweils während eines Ausstoßhubes des zugehörigen Förderkolbens 5, 6 und schließen ansonsten.

Der mechanische Antrieb der beiden Förderkolben 5, 6 erfolgt über eine gemeinsame Kolbenstange 17, so dass sich die beiden Förderkolben 5, 6 immer in entgegengesetzten Richtungen bewegen. Dies bedeutet, dass bei den beiden Förderkolben 5, 6 der Ausstoßhub und der Auffüllhub jeweils gegenphasig verlaufen.

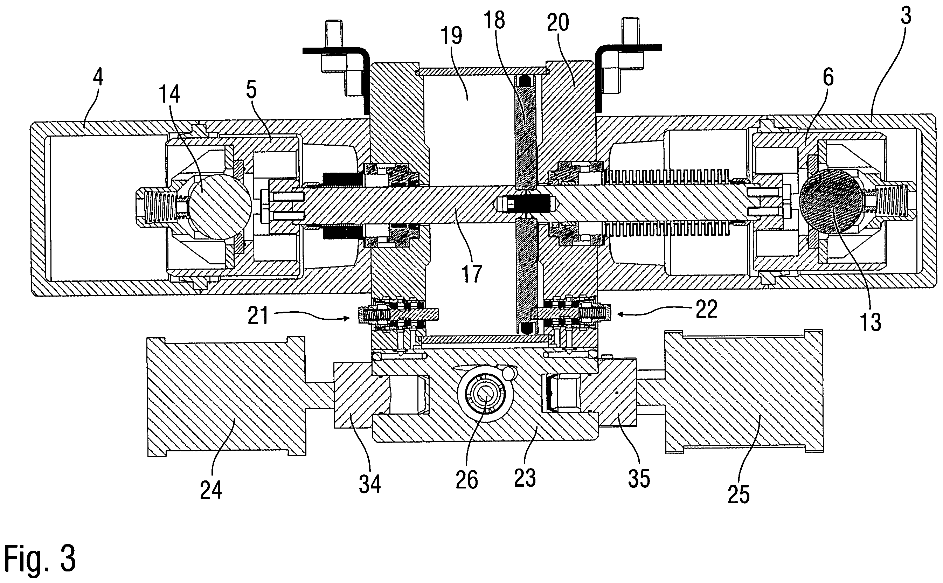

Der mechanische Antrieb der gemeinsamen Kolbenstange 17 erfolgt durch einen Pneumatikkolben 18, der in einem Pneumatikzylinder 19 angeordnet ist und beidseitig mit Druckluft beaufschlagt werden kann. Die Figuren 2 und 3 zeigen den Pneumatikkolben 18 hierbei jeweils an einem Totpunkt.

In einem Gehäuse 20 des Pneumatikzylinders 19 sind zwei Umschaltventile 21, 22 angeordnet, die von dem Pneumatikkolben 18 betätigt werden, wenn der Pneumatikkolben 18 einen seiner beiden Totpunkte erreicht. So aktiviert der Pneumatikkolben 18 in den Figuren 2 und 3 das Umschaltventil 22.

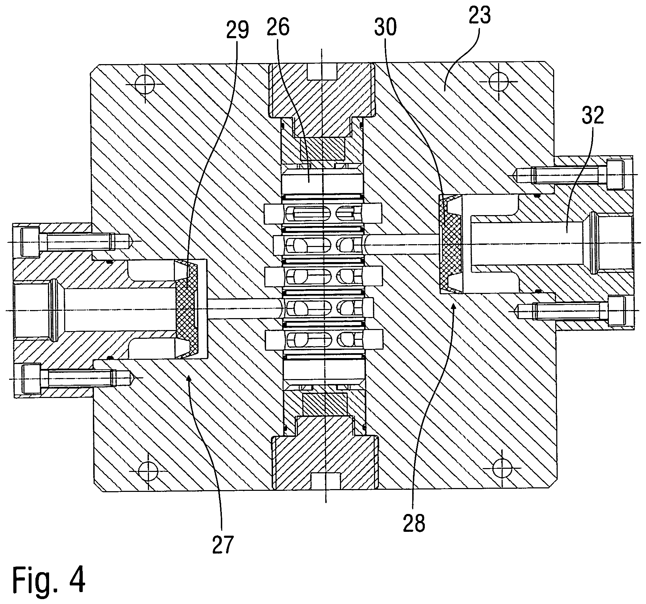

Die beiden Umschaltventile 21, 22 steuern die Abluft aus dem Pneumatikzylinder 19 auch beiderseits des Pneumatikkolbens 18. Die Abluft aus dem Pneumatikzylinder 19 wird dann durch eine Abluftführung abgeführt, wobei die Abluftführung durch eine Umschalteinheit 23 in zwei Schalldämpfer 24, 25 führt. In der Umschalteinheit 23 befindet sich hierbei ein Steuerschieber 26, der in Figur 4 in senkrechter Richtung verschoben werden kann, wobei die Stellung des Steuerschiebers 26 pneumatisch über die Umschaltventile 21, 22 eingestellt wird. Die Stellung des Steuerschiebers 26 in der Umschalteinheit 23 steuert wiederum zwei Membranventile 27, 28 an, die in dem Abluftkanal der Abluftführung angeordnet sind und mittels jeweils einer elastischen Ventilmembran 29, 30 aus Kunststoff den Abluftstrom freigeben oder sperren.

In Figur 4 ist das Membranventil 27 in einer geschlossenen Stellung gezeigt, während das Membranventil 28 auf der gegenüberliegenden Seite geöffnet ist.

Die Erfindung zeichnet sich nun durch die besondere konstruktive Gestaltung der Abluftführung aus dem Pneumatikzylinder 19 aus.

Zunächst ist zu erwähnen, dass die Abluftführung einen Einlass 31 aufweist, an dem die Abluft aus dem Pneumatikzylinder 19 aufgenommen wird. Die Abluft strömt dann durch einen Abluftkanal 32, zu einem Auslass 33, an dem der Schalldämpfer 24 bzw. 25 angeschlossen ist. Der Abluftkanal 32 gehört hierbei bereits zu dem Schalldämpfer 24 bzw. 25.

Wichtig ist hierbei zunächst, dass der Querschnitt des Abluftkanals 32 zwischen dem Einlass 31 und dem Auslass 33 nahezu konstant ist, so dass es in dem Abluftkanal 32 nicht zu einer Expansion der Abluft kommt, so dass auch keine expansionsbedingte Abkühlung auftritt. Dadurch wird bereits verhindert, dass es im Bereich der Umschalteinheit 23 zu einer wesentlichen Abkühlung kommt, die zur Bildung von Kondenswasser und im schlimmsten Fall zu Eisbildung führen könnte, wodurch sogar die Funktionsfähigkeit der Umschalteinheit 23 beeinträchtigt werden könnte.

Allerdings wird die Abluft dann in dem Schalldämpfer 24 bzw. 25 expandiert, was zu einer entsprechenden Abkühlung der Abluft und damit auch des Schalldämpfers 24 bzw. 25 führt. Der Schalldämpfer 24 bzw. 25 ist jedoch erfindungsgemäß durch ein Wärmeisolationselement 34 bzw. 35 thermisch von der Umschalteinheit 23 entkoppelt, wobei der Abluftkanal 32 durch das Wärmeisolationselement 34 bzw. 35 hindurch zu dem jeweiligen Schalldämpfer 24 bzw. 25 verläuft. Diese thermische Entkopplung durch das Wärmeisolationselement 34 bzw. 35 sorgt dafür, dass die nicht vermeidbare starke Abkühlung des Schalldämpfers 24 bzw. 25 nicht zu einer übermäßigen Abkühlung der Umschalteinheit 23 führt.

Weiterhin ist zu erwähnen, dass die Abluftströmung in dem Abluftkanal 32 im Bereich von Richtungsänderung nicht auf das aus Metall bestehende Gehäuse der Umschalteinheit 23 auftrifft, sondern auf das Wärmeisolationselement 32 oder auf die aus Kunststoff bestehende Ventilmembran 30. Dies ist vorteilhaft, weil durch eine rechtwinklige Anströmung eines Gehäuseteils durch die kalte Abluft ein guter Wärmeübergang und damit eine starke Abkühlung des Gehäuseteils begünstigt werden. Es ist deshalb sinnvoll, in diesen Bereichen mit einer starken Richtungsänderung Wärmeisolationselemente vorzusehen.

### Bezugszeichenliste

- 1: Pumpeneinlass
- 2: Pumpenauslass
- 3: Förderzylinder
- 4: Förderzylinder
- 5: Förderkolben im Förderzylinder
- 6: Förderkolben im Förderzylinder
- 7: Beschichtungsmitteleinlass am Förderzylinder
- 8: Beschichtungsmitteleinlass am Förderzylinder
- 9: Beschichtungsmittelauslass am Förderzylinder
- 10: Beschichtungsmittelauslass am Förderzylinder
- 11: Rohr
- 12: Rohr
- 13: Rückschlagventil im Förderkolben
- 14: Rückschlagventil im Förderkolben
- 15: Rückschlagventil im Beschichtungsmittelauslass
- 16: Rückschlagventil im Beschichtungsmittelauslass
- 17: Kolbenstange
- 18: Pneumatikkolben
- 19: Pneumatikzylinder
- 20: Gehäuse des Pneumatikzylinders
- 21: Umschaltventil
- 22: Umschaltventil
- 23: Umschalteinheit
- 24: Schalldämpfer
- 25: Schalldämpfer
- 26: Steuerschieber in der Umschalteinheit
- 27: Membranventil
- 28: Membranventil
- 29: Ventilmembran
- 30: Ventilmembran
- 31: Einlass der Abluftführung
- 32: Abluftkanal
- 33: Auslass der Abluftführung
- 34: Wärmeisolationselement
- 35: Wärmeisolationselement

## Patentansprüche

1. Abluftführung zur Abführung von Abluft von einer pneumatisch angetriebenen Pumpe, insbesondere von einer Beschichtungsmittelpumpe in einer Lackieranlage, mit
a) einem Einlass (31) zur Aufnahme der Abluft von der Pumpe,
b) einem Auslass (33) zur Abgabe der Abluft, und
c) einem Abluftkanal (32), in dem die Abluft von dem Einlass zu dem Auslass der Abluftführung strömt, und
d) einem Gehäusekörper (23), in dem der Abluftkanal (32) verläuft,
e) einem Schalldämpfer (24, 25), der an den Auslass (33) der Abluftführung angeschlossen ist, so dass die Abluft aus dem Auslass (33) der Abluftführung in den Schalldämpfer (24, 25) strömt, dann in dem Schalldämpfer (24, 25) expandiert und schließlich aus dem Schalldämpfer (24, 25) in die Umgebung abgegeben wird, und
f) einer Umschalteinheit (23) zum Umschalten der Pumpe, insbesondere zwischen entgegengesetzten Bewegungsrichtungen eines pneumatisch angetriebenen Kolbens (18) der Pumpe, wobei die Umschalteinheit (23) in dem Gehäusekörper (23) angeordnet ist und der Abluftkanal (32) durch die Umschalteinheit (23) hindurch zu dem Schalldämpfer (24, 25) verläuft,
g) wobei die Umschalteinheit (23) durch ein erstes Wärmeisolationselement (34, 35) mechanisch mit dem Schalldämpfer (24, 25) verbunden ist,
h) wobei der Abluftkanal (32) durch das erste Wärmeisolationselement (34, 35) hindurch zu dem Schalldämpfer (24, 25) verläuft, und
i) wobei das erste Wärmeisolationselement (34, 35) den Schalldämpfer (24, 25) thermisch von der Umschalteinheit (23) entkoppelt, um den Wärmeübergang von der Umschalteinheit (23) auf den Schalldämpfer (24, 25) zu verringern,
**dadurch gekennzeichnet,**
j) **dass** die Umschalteinheit (23) ein Membranventil (27, 28) aufweist mit einer elastischen Membran (29, 30), wobei die elastische Membran (29, 30) ein zweites Wärmeisolationselement bildet.

2. Abluftführung nach Anspruch 1, **dadurch gekennzeichnet, dass** die Abluft im Bereich einer Richtungsänderung des Abluftkanals (32) stumpfwinklig auf das zweite Wärmeisolationselement (29, 30) in dem Abluftkanal (32) trifft, das heißt mit einem Anströmwinkel von 30°-90° zwischen dem Abluftstrom und der Wandung des zweiten Wärmeisolationselements (29, 30), um ein Aufstauen der Abluft direkt an der Innenwand des Abluftkanals (32) zu vermeiden und dadurch die Abkühlung des Gehäusekörpers (23) zu verringern.

3. Abluftführung nach Anspruch 1 oder 2,
**dadurch gekennzeichnet,**
a) **dass** der Abluftkanal (32) einen Querschnitt aufweist, der sich in Strömungsrichtung nicht aufweitet, um eine Expansion der Abluft und eine expansionsbedingte Abkühlung der Abluft in dem Abluftkanal (32) zu vermeiden, und/oder
b) **dass** der Querschnitt des Ablaufkanals in Strömungsrichtung eine im Wesentlichen konstante Größe aufweist.

4. Abluftführung nach einem der vorhergehenden Ansprüche, **dadurch gekennzeichnet,**
a) **dass** das erste Wärmeisolationselement (29, 30, 34, 35) aus Kunststoff besteht, und/oder
b) **dass** das zweite Wärmeisolationselement (34, 35) aus Kunststoff besteht, und/oder
c) **dass** die Umschalteinheit (23) im Wesentlichen aus Metall besteht, und/oder
d) **dass** der Gehäusekörper im Wesentlichen aus Metall besteht, und/oder
e) **dass** der Abluftkanal (32) eine Wandung aus Metall aufweist, und/oder
f) **dass** das erste (34, 35) und/oder zweite Wärmeisolationselement (29, 30) aus einem Material besteht, das eine geringe Wärmeleitfähigkeit aufweist als das Material der Umschalteinheit ((23), des Gehäusekörpers (23) und/oder der Wandung des Abluftkanals (32).

5. Beschichtungsmittelpumpe mit einer Abluftführung nach einem der vorhergehenden Ansprüche.

6. Beschichtungsmittelpumpe nach Anspruch 5,
**gekennzeichnet durch**
a) einen ersten Förderzylinder (3),
b) einen ersten Kolben (6), der in dem ersten Förderzylinder (3) verschiebbar angeordnet ist,
c) einen zweiten Förderzylinder (4),
d) einen zweiten Kolben (5), der in dem zweiten Förderzylinder (4) verschiebbar angeordnet ist,
e) einen Beschichtungsmitteleinlass (7, 8), der in die beiden Förderzylinder (3, 4) mündet,
f) einen Beschichtungsmittelauslass (9, 10), der in die beiden Förderzylinder (3, 4) mündet,
g) eine Kolbenstange (17), die den ersten Kolben (6) und den zweiten Kolben (5) antreibt,
h) einen Pneumatikzylinder (19), und
i) einen dritten Kolben (18), der in dem Pneumatikzylinder (19) angeordnet ist und die Kolbenstange (17) antreibt.

7. Beschichtungsmittelpumpe nach Anspruch 6,
**dadurch gekennzeichnet,**
a) **dass** in dem ersten Kolben (6) ein erstes Rückschlagventil (13) angeordnet ist, und/oder
b) **dass** in dem zweiten Kolben (5) ein zweites Rückschlagventil (14) angeordnet ist, und/oder
c) **dass** in dem Beschichtungsmittelauslass (9) an dem ersten Förderzylinder (3) ein drittes Rückschlagventil (15) angeordnet ist, und/oder
d) **dass** in dem Beschichtungsmittelauslass (10) an dem zweiten Förderzylinder (4) ein viertes Rückschlagventil (16) angeordnet ist, und/oder
e) **dass** die Umschalteinheit (23) die Zuluft in den Pneumatikzylinder (19) und/oder die Abluft aus dem Pneumatikzylinder (19) steuert, und/oder
f) **dass** der erste Kolben (6) und der zweite Kolben (5) und der dritte Kolben (18) koaxial angeordnet sind und jeweils fest mit der Kolbenstange (17) verbunden sind.

## Claims

1. Exhaust air duct for exhausting exhaust air from a pneumatically driven pump, in particular from a coating agent pump in a painting plant, with
a) an inlet (31) for receiving the exhaust air from the pump,
b) an outlet (33) for discharging the exhaust air, and
c) an exhaust air duct (32) in which the exhaust air flows from the inlet to the outlet of the exhaust air duct, and
d) a housing body (23) in which the exhaust air duct (32) runs,
e) a silencer (24, 25) connected to the outlet (33) of the exhaust air duct so that the exhaust air flows from the outlet (33) of the exhaust air duct into the silencer (24, 25), then expands in the silencer (24, 25) and finally is discharged from the silencer (24, 25) into the environment, and
f) a switching unit (23) for switching over the pump, in particular between opposite directions of movement of a pneumatically driven piston (18) of the pump, wherein the switching unit (23) is arranged in the housing body (23) and the exhaust air duct (32) extends through the switching unit (23) towards the silencer (24, 25),
g) wherein the switching unit (23) is mechanically connected to the silencer (24, 25) by a first thermal insulation element (34, 35),
h) wherein the exhaust air duct (32) is passing through the first thermal insulation element (34, 35) to the silencer (24, 25); and
i) wherein the first thermal insulation element (34, 35) thermally decouples the silencer (24, 25) from the switching unit (23) to reduce heat transfer from the switching unit (23) to the silencer (24, 25),
**characterized**
j) **in that** the switching unit (23) has a diaphragm valve (27, 28) with an elastic diaphragm (29, 30), the elastic diaphragm (29, 30) forming a second thermal insulation element.

2. Exhaust air duct according to Claim 1, **characterized in that** the exhaust air impacts on the second heat insulation element (29, 30) in a region of a change in direction of the exhaust air duct (32) at an obtuse angle, i.e. with an incident flow angle of 30°-90° between the exhaust air flow and the wall of the second thermal insulation element (29, 30), in order to avoid accumulation of the exhaust air directly at the inner wall of the exhaust air duct (32) and thereby to reduce the cooling of the housing body (23).

3. Exhaust air routing according to claim 1 or 2,
**characterized**
a) **in that** the exhaust air duct (32) has a cross-section which is not widening in the flow direction, in order to avoid expansion of the exhaust air and expansion-induced cooling of the exhaust air in the exhaust air duct (32), and/or
b) **in that** the cross-section of the exhaust air duct in the direction of flow has a substantially constant size.

4. Exhaust air ducting according to one of the preceding claims,
**characterized**
a) **in that** the first thermal insulation element (29, 30, 34, 35) consists of plastic, and/or
b) **in that** the second thermal insulation element (34, 35) consists of plastic, and/or
c) **in that** the switching unit (23) consists essentially of metal, and/or
d) that the housing body consists essentially of metal, and/or
e) **in that** the exhaust air duct (32) has a wall made of metal, and/or
f) **in that** the first (34, 35) and/or second thermal insulation element (29, 30) consists of a material which has a lower thermal conductivity than the material of the switching unit (23), the housing body (23) and/or the wall of the exhaust air duct (32).

5. Coating agent pump with an exhaust air duct according to one of the preceding claims.

6. Coating agent pump according to claim 5,
**characterized by**
a) a first delivery cylinder (3),
b) a first piston (6) which is displaceably arranged in the first delivery cylinder (3),
c) a second delivery cylinder (4),
d) a second piston (5) which is displaceably arranged in the second delivery cylinder (4),
e) a coating agent inlet (7, 8) which opens into the two delivery cylinders (3, 4),
f) a coating agent outlet (9, 10) which opens into the two delivery cylinders (3, 4),
g) a piston rod (17) driving said first piston (6) and said second piston (5),
h) a pneumatic cylinder (19); and
i) a third piston (18) disposed in said pneumatic cylinder (19) and driving said piston rod (17).

7. Coating agent pump according to claim 6,
**characterized**
a) **in that** a first non-return valve (13) is arranged in the first piston (6), and/or
b) **in that** a second non-return valve (14) is arranged in the second piston (5), and/or
c) **in that** a third non-return valve (15) is arranged in the coating agent outlet (9) on the first delivery cylinder (3), and/or
d) **in that** a fourth non-return valve (16) is arranged in the coating agent outlet (10) on the second delivery cylinder (4), and/or
e) **in that** the switching unit (23) controls the supply air into the pneumatic cylinder (19) and/or the exhaust air from the pneumatic cylinder (19), and/or
f) **in that** the first piston (6) and the second piston (5) and the third piston (18) are arranged coaxially and are each fixedly connected to the piston rod (17).

## Revendications

1. Guidage d'air vicié pour l'évacuation de l'air vicié d'une pompe pneumatique, plus particulièrement d'une pompe à produit de revêtement dans une installation de peinture, avec
a) une entrée (31) pour le logement de l'air vicié par la pompe,
b) une sortie (33) pour la sortie de l'air vicié et
c) un canal d'air vicié dans lequel l'air vicié s'écoule de l'entrée vers la sortie du guidage d'air vicié et
d) un corps de boîtier (23) dans lequel le canal d'air vicié (32) s'étend,
e) un silencieux (24, 25), qui est raccordé à la sortie (33) du guidage d'air vicié, de façon à ce que l'air vicié s'écoule de la sortie (33) du guidage d'air vicié vers le silencieux (24, 25), puis se dilate dans le silencieux (24, 25) et finalement est émis dans l'environnement et
f) une unité de commutation (23) pour la commutation de la pompe, plus particulièrement entre des directions de mouvement opposées d'un piston pneumatique (18) de la pompe, l'unité de commutation (23) étant disposée dans le corps de boîtier (23) et le canal d'air vicié (32) s'étendant à travers l'unité de commutation (23) vers le silencieux (24, 25),
g) l'unité de commutation (23) étant relié mécaniquement avec le silencieux (24, 25) par un premier élément d'isolation thermique (34, 35),
h) le canal d'air vicié (32) s'étendant à travers l'élément d'isolation thermique (34, 35) vers le silencieux (24, 25) et
i) le premier élément d'isolation thermique (34, 35) découplant thermiquement le silencieux (24, 25) de l'unité de commutation (23) afin de réduire le transfert thermique de l'unité de commutation (23) vers le silencieux (24, 25),
**caractérisé en ce que**
j) l'unité de commutation (23) comprend une soupape à membrane (27, 28) avec une membrane élastique (29, 30), la membrane élastique (29, 30) constituant un deuxième élément d'isolation thermique.

2. Guidage d'air vicié selon la revendication 1, **caractérisé en ce que** l'air vicié rencontre, au niveau d'un changement de direction du canal d'air vicié (32), avec un angle obtus, le deuxième élément d'isolation thermique (29, 30) dans le canal d'air vicié (32), c'est-à-dire avec un angle d'écoulement de 30° à 90° entre le flux d'air vicié et la paroi du deuxième élément d'isolation thermique (29, 30), afin d'éviter une accumulation de l'air vicié directement sur la paroi interne du canal d'air vicié (32) et de réduire ainsi le refroidissement du corps de boîtier (23).

3. Guidage d'air vicié selon la revendication 1 ou 2,
**caractérisé en ce que**
a) le canal d'air vicié (32) présente une section transversale qui ne s'élargit par dans la direction de l'écoulement afin d'éviter un refroidissement dû à la dilatation de l'air vicié dans le canal d'air vicié (32) et/ou
b) la section transversale du canal d'évacuation présente une taille globalement constante dans la direction de l'écoulement.

4. Guidage d'air vicié selon l'une des revendications précédentes,
**caractérisé en ce que**
a) le premier élément d'isolation thermique (29, 30, 34, 35) est constitué de matière plastique et/ou
b) le deuxième élément d'isolation thermique (34, 35) est constitué de matière plastique et/ou
c) l'unité de commutation (23) est constituée globalement de métal et/ou
d) le corps de boîtier est constitué globalement de métal et/ou
e) le canal d'air vicié (32) comprend une paroi en métal et/ou
f) le premier (34, 35) et/ou le deuxième élément d'isolation thermique (29, 30) est constitué d'un matériau qui présente une conductivité thermique inférieure à celle du matériau de l'unité de commutation (23), du corps de boîtier (23) et/ou de la paroi du canal d'air vicié (32).

5. Pompe à produit de revêtement avec un guidage d'air vicié selon l'une des revendications précédentes.

6. Pompe à moyen de revêtement selon la revendication 5,
**caractérisée par**
a) un premier cylindre de refoulement (3),
b) un premier piston (6) qui est disposé de manière coulissante dans le premier cylindre refoulement (3),
c) un deuxième cylindre de refoulement (4),
d) un deuxième piston (5), qui est disposé de manière coulissante dans le deuxième cylindre refoulement (4),
e) une entrée de produit de revêtement (7, 8) qui débouche dans les deux cylindres de refoulement (3, 4),
f) une sortie de produit de revêtement (9, 10) qui débouche dans les deux cylindres de refoulement (3, 4),
g) une tige de piston (17), qui entraîne le premier piston (6) et le deuxième piston (5),
h) un cylindre pneumatique (19) et
i) un troisième piston (18) qui est disposé dans le cylindre pneumatique (19) et qui entraîne la tige de piston (17).

7. Pompe à produit de revêtement selon la revendication 6,
**caractérisée en ce que**
a) dans le premier piston (6) est disposé un premier clapet anti-retour (13) et/ou
b) dans le deuxième piston (5) est disposé un deuxième clapet anti-retour (14) et/ou
c) dans la sortie de produit de revêtement (9) sur le premier cylindre de refoulement (3), est disposé un troisième clapet anti-retour (15) et/ou
d) dans la sortie de produit de revêtement (10) sur le deuxième cylindre de refoulement (4), est disposé un quatrième clapet anti-retour (16) et/ou
e) l'unité de commutation (23) contrôle l'arrivée d'air dans le cylindre pneumatique (19) et/ou l'évacuation de l'air vicié hors du cylindre pneumatique (19) et/ou
f) le premier piston (6) et le deuxième piston (5) et le troisième piston (18) sont disposés de manière coaxiale et sont reliés chacun fermement avec la tige de piston (17).
